# EUROPEAN PATENT SPECIFICATION

(11) **EP 3 848 751 B1**
(45) Date of publication and mention of the grant of the patent: **10.01.2024**
(21) Application number: 18932729.9
(22) Date of filing: 06.09.2018
(51) Int. Cl.: G03B 15/03, G03B 15/05, G03B 7/17, G03B 15/07, G06V 10/141

(54) **IMAGING ILLUMINATION APPARATUS AND PARTS MOUNTER**
BILDGEBUNGSBELEUCHTUNGSVORRICHTUNG UND TEILEHALTER
APPAREIL D'ÉCLAIRAGE D'IMAGERIE ET DISPOSITIF DE MONTAGE DE PIÈCES

(43) Date of publication of application: 14.07.2021
(73) Proprietor: Fuji Corporation, Chiryu-shi, Aichi 472-8686 (JP)
(72) Inventor: OKI, Hideaki, Chiryu-shi, Aichi 472-8686 (JP); YAMAKAGE, Yusuke, Chiryu-shi, Aichi 472-8686 (JP); TANAKAMARU, Shigenori, Chiryu-shi, Aichi 472-8686 (JP)
(74) Representative: Grünecker Patent- und Rechtsanwälte PartG mbB
(86) International application number: PCT/JP2018/033114
(87) International publication number: WO 2020/049703

(56) References cited:
- WO-A1-2005/031642
- WO-A1-2018/127971
- WO-A1-2018/127971
- WO-A1-2018/134862
- JP-A- 2002 236 310
- JP-A- 2004 145 142
- JP-B2- 4 355 500
- US-A1- 2006 024 040

## Description

### Technical Field

The present specification discloses a technique relating to an imaging illumination apparatus for illuminating an imaging target object to be imaged by a camera used for an image recognition and a parts mounter.

### Background art

For example, the parts mounter is equipped with a function of imaging a part picked up by a suction nozzle using a camera and recognizing the part by image processing, or a function of imaging a reference position mark of a circuit board on which the parts are mounted using a camera and recognizing the reference position mark by the image processing. When imaging the imaging target object using each camera, it is necessary to illuminate the imaging target object with an illumination apparatus.

For example, as described in Patent Literature 1 (JP-A-2009-110784) and Patent Literature 2 (JP-A-2006-294977), in an illumination apparatus provided in each camera of a parts mounter in recent years, a low power consumption and a low heat generation are realized by illuminating the imaging target object by pulse-lighting an LED using the LED as a light emitting element.

Furthermore, as described in Patent Literature 3 (JP-A-2001-94299), in an illumination apparatus provided in a parts imaging camera of a parts mounter in recent years, multiple illumination blocks are concentrically arranged around an optical axis of the camera and the illumination block to be pulse-lighted is selected among the multiple illumination blocks according to a shape and material of the imaging target object, and then, an irradiation angle of the illumination light to the imaging target object is changed, and thus, an image recognition accuracy of the imaging target object is improved.

### Patent Literature

Patent Literature 1: JP-A-2009-110784
Patent Literature 2: JP-A-2006-294977
Patent Literature 3: JP-A-2001-94299

WO 2018/134862 A1 discloses an imaging device including an illumination device 64 for irradiating illumination light on a component 32, and a component imaging device 65 for imaging the component irradiated by the illumination light. An illumination unit 72 of the illumination device 64 can be lit with a predetermined illumination pattern according to the type of electronic component 32, the surface state, and the terminal and lead mode.

JP 4355500 B2 A discloses a LED lighting system capable of emitting light of specified color temperature. An RGB LED group comprises three-color LEDs. The three-color LEDs are connected in parallel to a main capacitor, and a constant voltage is applied from the power supply circuit via the main capacitor. A system controller controls the ON / OFF duty ratio of the pulse signals applied to the bases of the transistors, and controls the light emission amounts of the LEDs of the respective colors, and the LED group.

It is the object of the present invention to provide an improved system for imaging illumination.

This object is solved by the subject matter of the independent claims.

Embodiments are defined in the dependent claims.

### Technical Problem

In general, a circuit that individually pulse-lights the multiple illumination blocks connects the multiple illumination blocks to a capacitor charged by a power supply section in parallel via the switching elements, and controls a switching operation (ON/OFF operation) of the switching elements of the illumination blocks to be pulse-lighted at the same time among the multiple illumination blocks. In this case, even when all the illumination blocks are pulse-lighted at the same time, a pulse width (continuous lighting time) of the pulse-lighting is set to a pulse width that allows the current necessary for all the illumination blocks to flow by the discharge current of the capacitor. In addition, a cycle of pulse-lighting (= continuous lighting time + off-lighting time) is set such that the charging of the capacitor can be completed within the off-lighting time before the start of the next pulse-lighting at each time the pulse-lighting ends. Usually, since a light receiving amount of the camera is insufficient with only one pulse-lighting, the imaging time (exposure time) of the camera is set so as to straddle a predetermined number of pulse-lightings necessary for ensuring the light receiving amount. That is, the imaging time of camera is set to "cycle of pulse-lighting" × "the number of pulse-lightings necessary for ensuring the light receiving amount of the camera".

In general, as the number of illumination blocks to be pulse-lighted at the same time decreases, the discharging amount of the capacitor decreases, and thus, a time necessary for charging the capacitor becomes short. However, since the pulse width and the cycle of pulse-lighting are set to constant values regardless of the number of illumination blocks to be pulse-lighted at the same time, as the number of illumination blocks to be pulse-lighted at the same time decreases, a time that the off-lighting state continues even after the capacitor is fully charged (a time from completion of charging the capacitor to the starting of next pulse-lighting) among the off-lighting time after the pulse-lighting ends becomes long, and thus, this time becomes a wasteful waiting time which is a cause of increase of the imaging time of the camera.

In addition, depending on a specification of the camera, a specification of the illumination apparatus, a shape and material of the imaging target object, and the like, it may be necessary to increase the imaging time of the camera, but as the imaging time of the camera increases, the number of pulse-lightings executed during that imaging time increases, and therefore, the problem of wasteful waiting time after the completion of charging the capacitor described above becomes more significant.

### Solution to Problem

In order to solve the problems described above, the present specification discloses an imaging illumination apparatus that illuminates an imaging target object which is to be imaged by a camera used for image recognition. The apparatus includes: multiple illumination blocks configured to be individually lighted; a charge section configured to be charged by a power supply section; multiple switching elements configured to be connected to the charge section in parallel, and to discharge the charge section by an ON-operation and individually pulse-light the multiple illumination blocks by the discharged current; and a control section configured to select the illumination blocks to be pulse-lighted at the same time from the multiple illumination blocks, to control a switching operation of the switching elements that pulse-light the selected illumination blocks, and to control imaging operation of the camera. The control section is configured to change a continuous lighting time which is a pulse width of pulse lighting according to the number of illumination blocks to be pulse-lighted at the same time among the multiple illumination blocks, and to change imaging time of the camera.

According to this configuration, the continuous lighting time which is the pulse width of pulse lighting is changed according to the number of illumination blocks to be pulse-lighted at the same time among the multiple illumination blocks of the imaging illumination apparatus, and the imaging time of the camera is changed. Therefore, it is possible to control the continuous lighting time to be increased as the number of illumination blocks to be pulse-lighted at the same time among multiple illumination blocks decreases, for example. As a result, if the continuous lighting time (pulse width of pulse lighting) increases, the number of pulse-lightings necessary for ensuring the light receiving amount of the camera can be reduced, and thus, it is possible to reduce the imaging time of the camera (exposure time).

### Brief Description of Drawings

Fig. 1 is a longitudinal side view illustrating a structure of a parts imaging camera unit in an embodiment 1.
Fig. 2 is a circuit diagram illustrating a configuration of a circuit for individually pulse-lighting three illumination blocks in embodiment 1 by one capacitor.
Fig. 3 is a time chart illustrating a relationship between a pulse width and a cycle of pulse-lighting, and an imaging time when all the three illumination blocks are pulse-lighted at the same time in the embodiment 1.
Fig. 4 is a time chart illustrating a relationship between the pulse width of the pulse-lighting and the imaging time when only one illumination block is pulse-lighted in the embodiment 1.
Fig. 5 is a time chart illustrating a relationship between the pulse width and the cycle of the pulse-lighting, and the imaging time when two illumination blocks are pulse-lighted at the same time in the embodiment 1.
Fig. 6 is a time chart illustrating a relationship between the pulse width and the cycle of the pulse-lighting, and the imaging time when only one illumination block is pulse lighted in the conventional art.
Fig. 7 is a time chart illustrating a relationship between the pulse width and the cycle of the pulse-lighting, and the imaging time when only one illumination block is pulse-lighted in embodiment 2.
Fig. 8 is a time chart illustrating a relationship between the pulse width and the cycle of the pulse-lighting, and the imaging time when two illumination blocks are pulse-lighted at the same time in the embodiment 2.
Fig. 9 is a circuit diagram illustrating a configuration of a circuit for individually pulse-lighting four illumination blocks in embodiment 3 by one capacitor.

### Description of Embodiments

Hereinafter, three embodiments 1 to 3 disclosed in the present specification will be described.

### Embodiment 1

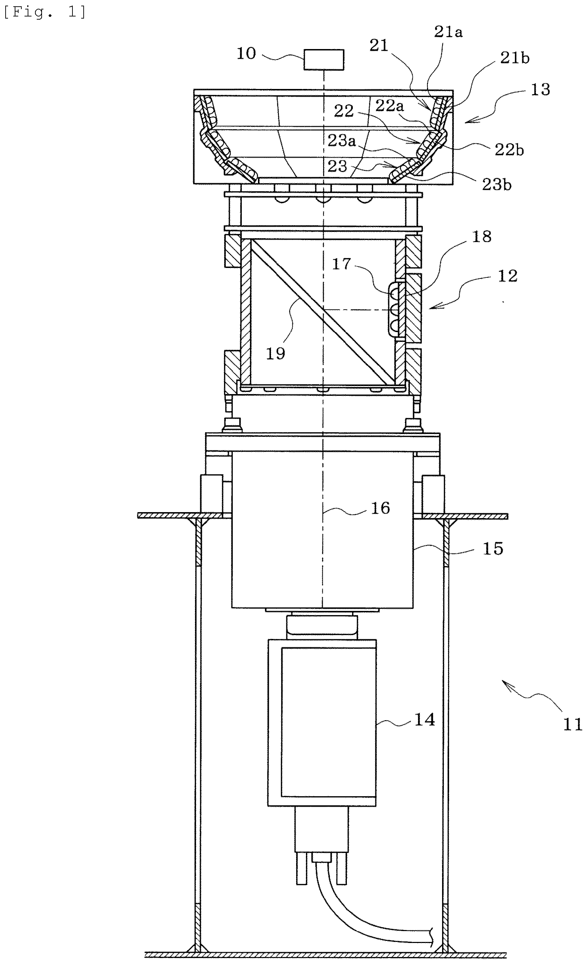

The embodiment 1 will be described based on Figs. 1 to 5. First, the configuration of parts imaging camera unit 11 of a parts mounter will be described with reference to Fig. 1.

Although not illustrated, parts imaging camera unit 11 is attached upward to the parts mounter, and a part picked up by a suction nozzle of the parts mounter is illuminated by coaxial epi-illumination apparatus 12 and side illumination apparatus 13 from below as imaging target object 10, and is imaged by camera 14. Camera 14 is configured by using, for example, an imaging element that captures a grayscale image (monochrome image) or a color image.

Lens unit 15 is attached above camera 14, coaxial epi-illumination apparatus 12 is attached above lens unit 15, and side illumination apparatus 13 is attached above coaxial epi-illumination apparatus 12. Coaxial epi-illumination apparatus 12 includes illumination block 18 on which multiple LEDs 17 (light emitting elements) that emit light in the horizontal direction toward optical axis 16 side of camera 14 are mounted, and half mirror 19 that reflects the illumination light of the illumination block 18 in the direction perpendicular to imaging target object 10 above, and is configured such that the illumination light reflected by half mirror 19 illuminates imaging target object 10 from a direction parallel to optical axis 16 of camera 14. In the present embodiment 1, a red light emitting diode (red LED) which is relatively inexpensive and has a feature of low power consumption is used as LED 17 of illumination block 18 of coaxial epi-illumination apparatus 12.

On the other hand, side illumination apparatus 13 has a configuration in which, for example, three-stages of upper, middle, and lower annular illumination blocks 21, 22, and 23 are arranged in a bowl shape or a polygonal pyramid shape centered on optical axis 16 of camera 14. Illumination blocks 21, 22, and 23 of each stage is configured by, for example, assembling multiple LED mounted boards 21b, 22b, and 23b on which multiple number of LEDs 21a, 22a, 23a (light emitting elements) are mounted in a polygonal ring shape such as an octagon, and an irradiation angle of the illumination light of illumination blocks 21, 22, and 23 of each stage with respect to imaging target object 10 is set such that imaging target object 10 positioned on optical axis 16 of camera 14 is irradiated with the illumination light of illumination blocks 21, 22 and 23 of each stage from an oblique direction.

In the present embodiment 1, as LED 21a of illumination block 21 in the upper stage, a blue light emitting diode (blue LED) that generates blue light that makes it easy to recognize bumps on the lower surface of the part which is imaging target object 10, is used, and as LEDs 22a and 23a of illumination blocks 22 and 23 in the middle and lower stages, a red light emitting diode (red LED) which is relatively inexpensive and has low power consumption, is used.

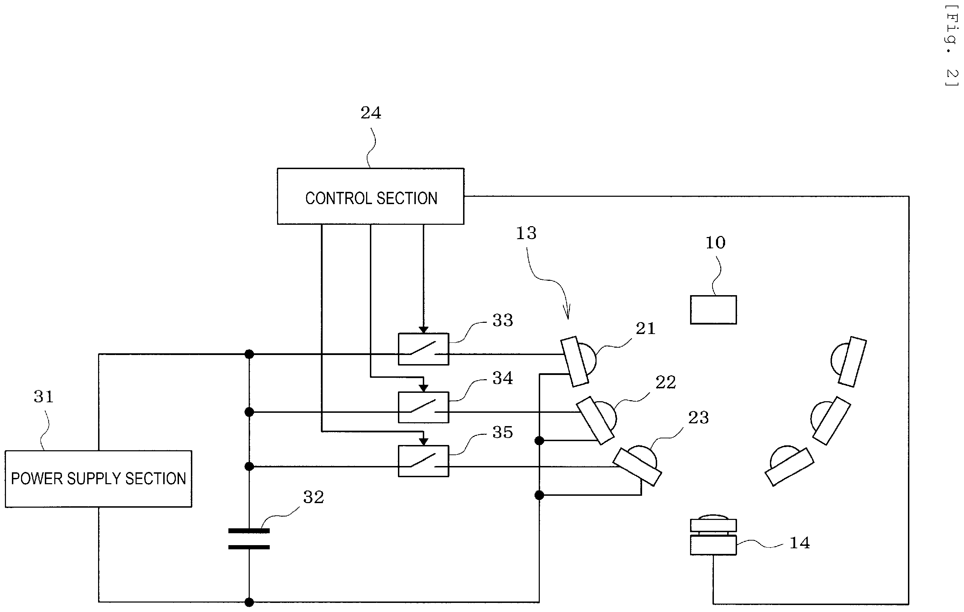

Illumination blocks 21, 22, and 23 of each stage of side illumination apparatus 13 are configured to individually lighted, and are configured such that an illumination pattern which is a combination pattern of ON and OFF of lighting illumination blocks 21, 22, and 23 of each stage of side illumination apparatus 13 is switched according to the type (size, shape, material, and the like) of the part which is imaging target object 10, by control section 24 (refer to Fig. 2) of the parts mounter.Control section 24 of the parts mounter also functions as an image processing device that performs the image processing on the image captured by camera 14 and recognizes imaging target object 10.

Next, a configuration of a circuit that individually pulse-lights three illumination blocks 21, 22, and 23 of side illumination apparatus 13 will be described with reference to Fig. 2.

Three illumination blocks 21, 22, and 23 are connected in parallel to capacitor 32 (charge section) charged by power supply section 31 via switching elements 33, 34, and 35 such as transistors, respectively. In this case, capacitor 32 may be one capacitor or may be configured by connecting multiple capacitors in parallel as long as the capacitor has a charging function to be charged by power supply section 31.

Control section 24 of parts mounter is mainly configured with one or multiple computers (CPUs), selects illumination blocks to be pulse-lighted at the same time from three illumination blocks 21, 22, and 23 of side illumination apparatus 13 according to the type (size, shape, material, and the like) of the part which is imaging target object 10 according to the production program (production job), controls the switching operation (ON/OFF operation) of switching elements 33, 34, and 35 that pulse-light the selected illumination blocks, and also controls the imaging operation of camera 14.

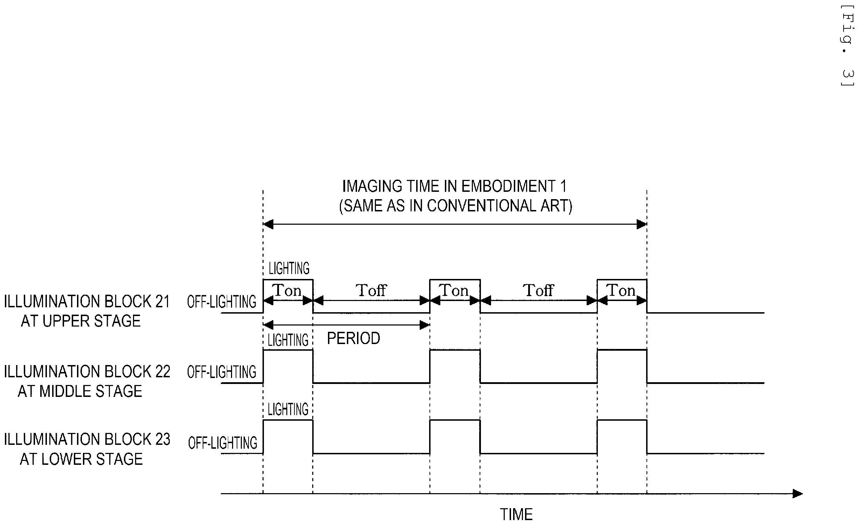

In this case, as illustrated in Fig. 3, when all illumination blocks 21, 22, and 23 of side illumination apparatus 13 are pulse-lighted at the same time, the pulse width (continuous lighting time Ton) of the pulse lighting is set to a pulse width that allows the current necessary for all illumination blocks 21, 22, 23 to flow by the discharge current of one capacitor 32. In addition, the cycle of pulse-lighting (= continuous lighting time Ton + off-lighting time Toff) is set such that the charging of capacitor 32 can be completed within the off-lighting time Toff before the start of next pulse lighting at each time the pulse lighting ends. Usually, since the light receiving amount of camera 14 is insufficient with only one pulse-lighting, the imaging time (exposure time) of camera 14 is set so as to straddle a predetermined number of pulse-lightings necessary for ensuring the required light receiving amount. That is, the imaging time of camera 14 is set to "cycle of pulse-lighting" × "the number of pulse-lightings necessary for ensuring the light receiving amount of camera 14". In the example in Fig. 3, when all illumination blocks 21, 22, and 23 of side illumination apparatus 13 are pulse-lighted at the same time, since the number of pulse-lightings necessary for ensuring the light receiving amount of camera 14 is three, the imaging time of camera 14 is "(Ton + Toff) × 3" which is the time for three cycles of pulse lighting.

In general, as the number of illumination blocks to be pulse-lighted at the same time among three illumination blocks 21, 22, and 23 of side illumination apparatus 13 decreases, the discharging amount of capacitor 32 decreases. Therefore, the time necessary for charging capacitor 32 is reduced. As in the conventional art, if the pulse width and the cycle of pulse lighting are set to constant values regardless of the number of illumination blocks to be pulse-lighted at the same time, as the number of illumination blocks to be pulse-lighted at the same time decreases, among the off-lighting time after the pulse lighting ends, the time that the off-lighting state continues even after the completion of charging of capacitor 32 (the time from the completion of charging of capacitor 32 to the start of the next pulse lighting) increases, and thus, this time becomes a wasteful waiting time and becomes a cause of lengthening the imaging time of camera 14.

Therefore, in the present embodiment 1, control section 24 of the parts mounter changes the continuous lighting time, which is the pulse width of the pulse lighting according to the number of illumination blocks to be pulse-lighted at the same time among three illumination blocks 21, 22, and 23 of side illumination apparatus 13, and also changes the imaging time of camera 14. Specifically, the continuous lighting time which is the pulse width of the pulse lighting is controlled to be increased as the number of illumination blocks to be pulse-lighted at the same time among three illumination blocks 21, 22, and 23 of side illumination apparatus 13 decreases. In other words, if the number of illumination blocks to be pulse-lighted at the same time decreases, the continuous lighting time, which is the pulse width of the pulse lighting is increased such that the charge amount of capacitor 32 is used out by one pulse lighting to that small number of illumination blocks. As a result, if the continuous lighting time which is the pulse width of the pulse lighting increases, the number of pulse-lightings necessary for ensuring the light receiving amount of camera 14 can be reduced, and therefore, the imaging time (exposure time) of camera 14 can be reduced.

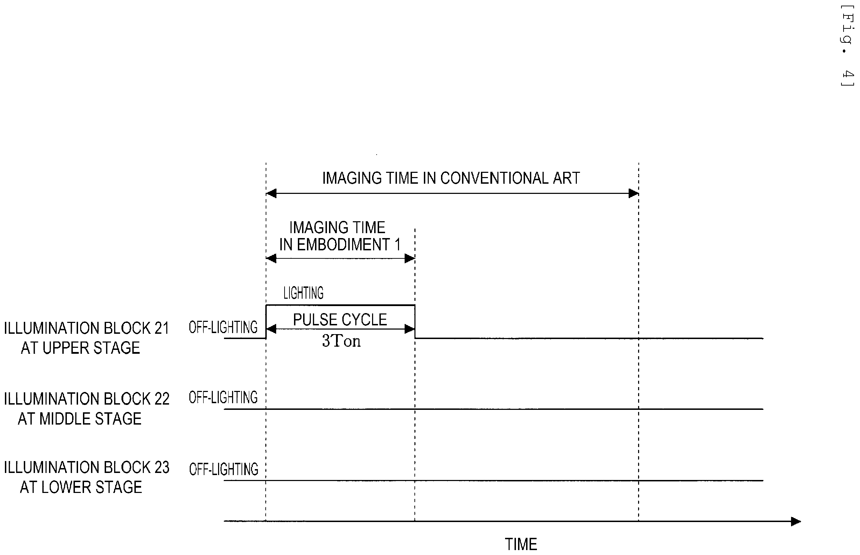

For example, Fig. 4 is a time chart illustrating a relationship between the pulse width of the pulse lighting and the imaging time when only one illumination block 21 out among three illumination blocks 21, 22, and 23 of side illumination apparatus 13 is pulse-lighted. If the continuous lighting time which is the pulse width of the pulse lighting when all illumination blocks 21, 22, and 23 of side illumination apparatus 13 are pulse-lighted at the same time, is set to Ton [sec] as illustrated in Fig. 3, and when only one illumination block 21 is pulse-lighted as illustrated in Fig. 4, control section 24 of the parts mounter sets the continuous lighting time which is the pulse width of the pulse lighting to the continuous lighting time 3 Ton [sec], which is three times the continuous lighting time Ton when three illumination blocks 21, 22, and 23 are pulse-lighted at the same time.
such that the charge amount of capacitor 32 is used out by one pulse lighting. As a result, since the number of pulse-lightings necessary for ensuring the light receiving amount of camera 14 is only one, the imaging time of camera 14 is set to a time same as the continuous lighting time 3Ton [sec], which is the pulse width of one pulse lighting.

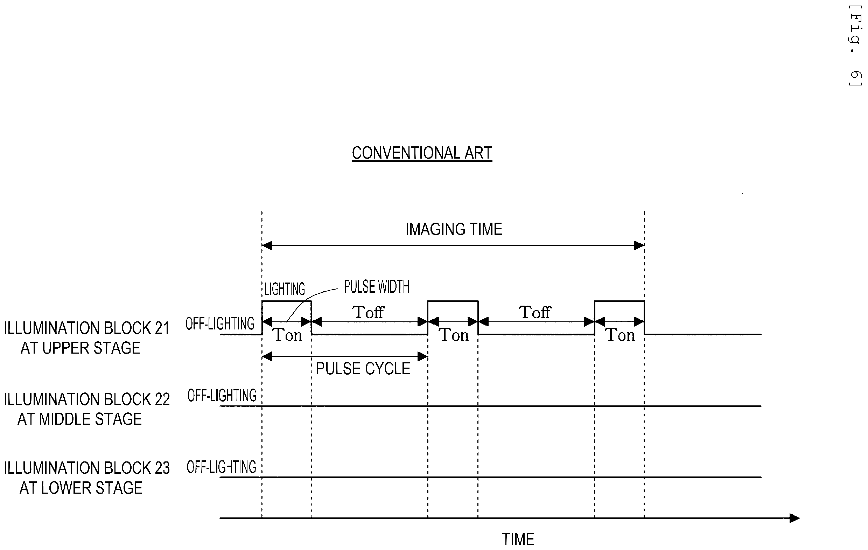

On the other hand, in the conventional art, since the pulse width and cycle of the pulse lighting were set to constant values regardless of the number of illumination blocks to be pulse-lighted at the same time, as illustrated in Fig. 6, even when only one illumination block 21 among three illumination blocks 21, 22, and 23 of side illumination apparatus 13 is pulse-lighted, the imaging time of camera 14 becomes the imaging time same as when all illumination blocks 21, 22, and 23 are pulse-lighted at the same time, and thus, the imaging time of camera 14 is significantly longer than that in the present embodiment 1 in Fig. 4.

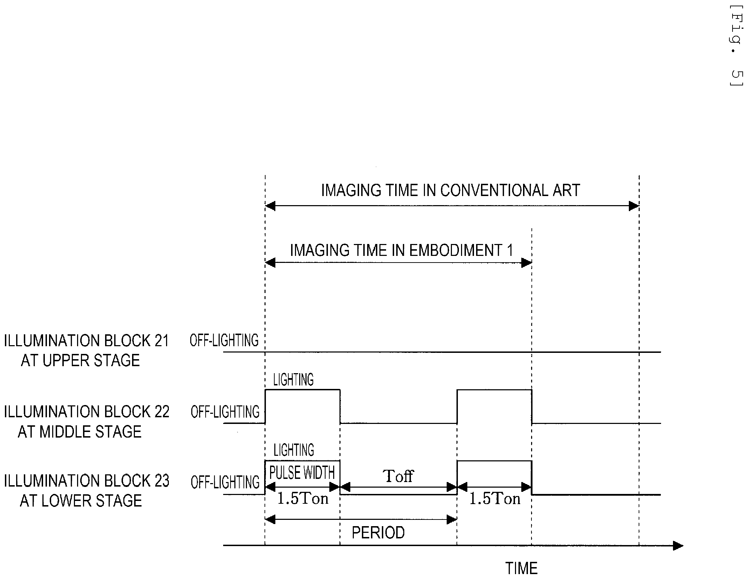

On the other hand, Fig. 5 is a time chart illustrating a relationship between the pulse width (continuous lighting time) and the cycle of the pulse-lighting, and the imaging time when two illumination blocks 22 and 23 among the are pulse lighted at the same time among three illumination blocks 21, 22, and 23 of side illumination apparatus 13 in the embodiment 1. As illustrated, the continuous lighting time when two illumination blocks 22 and 23 are pulse-lighted at the same time is set to the continuous lighting time of 1.5Ton [SEC] which is 1.5 times the continuous lighting time when three illumination blocks 21, 22 and 23 are pulse-lighted at the same time. As a result, since the number of pulse-lightings necessary for ensuring the light receiving amount of camera 14 is two, the imaging time of camera 14 is set to "cycle of pulse-lighting + continuous lighting time 1.5Ton = 3Ton + Toff". In this case, the cycle of pulse-lighting (1.5Ton + Toff) becomes longer by 0.5Ton which is an increase in pulse width compared to the cycle (Ton + Toff) when three illumination blocks 21, 22, and 23 are pulse-lighted at the same time, but the off-lighting time Toff which is the charging time of capacitor 32 does not change.

In the present embodiment 1, side illumination apparatus 13 is divided into three illumination blocks 21, 22, and 23, but the number of illumination blocks may be 2 or 4 or more. Even in such a case, as the number of illumination blocks to be pulse-lighted at the same time among the multiple illumination blocks decreases, the continuous lighting time which is the pulse width of the pulse lighting is increased, and the imaging time of camera 14 is reduced.

Generally, if the number of multiple illumination blocks is N (where N is an integer equal to or larger than 2) and the continuous lighting time which is the pulse width when all of the multiple illumination blocks are pulse-lighted at the same time is Ton [sec], and when the number of illumination blocks to be pulse-lighted at the same time among the multiple illumination blocks is M (where M is an integer equal to or larger than 1 and equal to smaller than N), the continuous lighting time may be set to Ton × (N / M) [sec] such that the charge amount of capacitor 32 may be used out by one pulse lighting.

According to the present embodiment 1 described above, the continuous lighting time which is the pulse width of the pulse lighting is changed according to the number of illumination blocks to be pulse-lighted at the same time among multiple illumination blocks 21, 22, and 23 of side illumination apparatus 13, and the imaging time of camera 14 is changed. Therefore, for example, as the number of illumination blocks to be pulse-lighted at the same time among multiple illumination blocks 21, 22, 23 of side illumination apparatus 13 decreases, the continuous lighting time can be controlled to be increased. As a result, if the continuous lighting time (pulse width of the pulse lighting) increases, the number of pulse-lightings necessary for ensuring the light receiving amount of camera 14 can be decreased, and thus, it is possible to reduce the imaging time (exposure time) of camera 14. As a result, while transferring the part (imaging target object 10) picked up by the suction nozzle to the part mounting position of the circuit board, the time for imaging can be reduced by stopping the part at the imaging position above camera 14, and the cycle time of part pick up → imaging → mounting by the parts mounter can be shortened, and thus, it is possible to improve the productivity.

### Embodiment 2

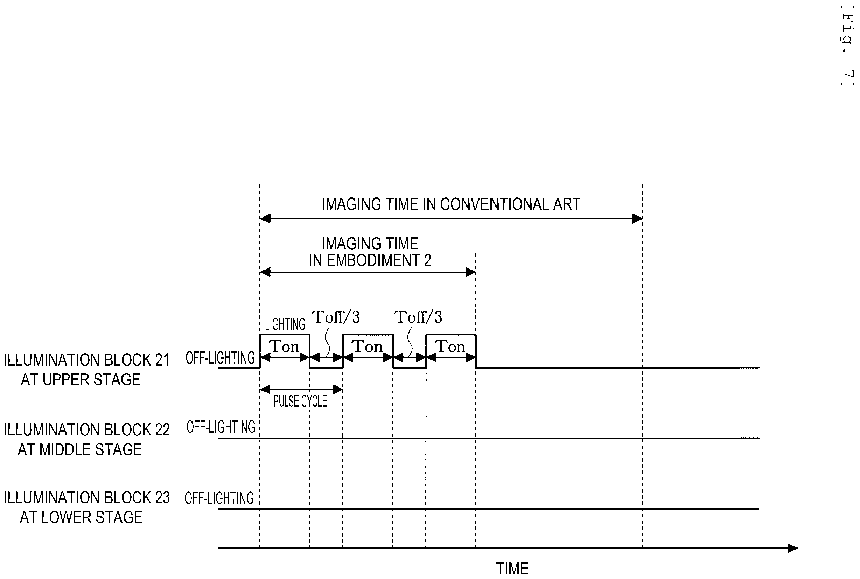

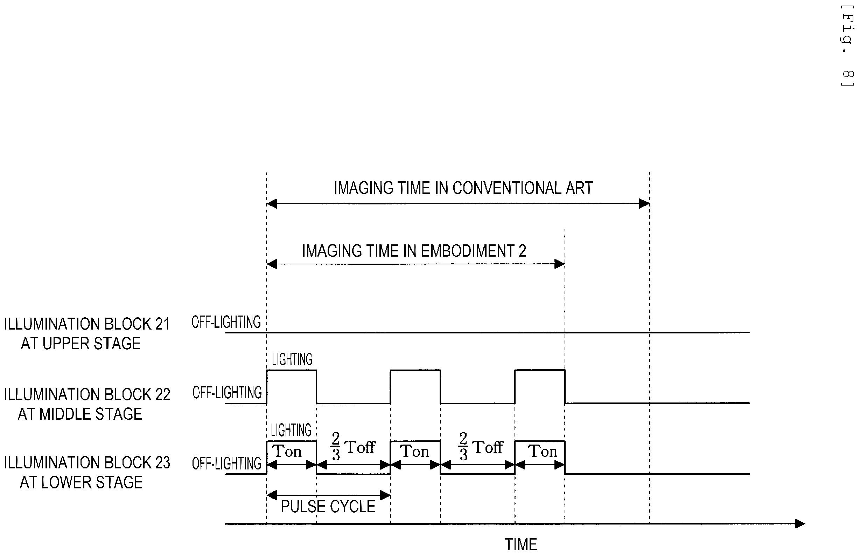

Next, embodiment 2 will be described with reference to Fig. 7 and Fig. 8. However, the same reference numerals will be assigned to actually the same portions as those of the embodiment 1, and descriptions thereof will be omitted or simplified, and mainly different portions will be described.

In the embodiment 1 described above, the continuous lighting time Ton which is the pulse width of the pulse lighting is changed according to the number of illumination blocks to be pulse-lighted at the same time among multiple illumination blocks 21, 22, and 23 of side illumination apparatus 13, however, in the embodiment 2 illustrated in Fig 7 and Fig. 8, control section 24 of the parts mounter changes the cycle of pulse-lighting according to the number of illumination blocks to be pulse-lighted at the same time among multiple illumination blocks 21, 22, and 23 of side illumination apparatus 13 to change the off-lighting time which is the charging time of capacitor 32, and changes the imaging time of camera 14.

Specifically, as the number of illumination blocks to be pulse-lighted at the same time among multiple illumination blocks 21, 22, and 23 of side illumination apparatus 13 decreases, control section 24 of the parts mounter reduces the off-lighting time which is the charging time of capacitor 32, and reduces the imaging time of camera 14. For example, as the number of illumination blocks to be pulse-lighted at the same time among three illumination blocks 21, 22, and 23 of side illumination apparatus 13 decreases, the discharging amount of capacitor 32 decreases due to the pulse lighting. Therefore, the off-lighting time which is the charging time of capacitor 32 is controlled to be reduced. As a result, if the off-lighting time is reduced, the cycle of pulse-lighting (= continuous lighting time + off-lighting time) becomes is reduced. Therefore, the time for performing the pulse lighting as many time as necessary for ensuring the light receiving amount of camera 14 can be reduced, and thus, it is possible to reduce the imaging time (exposure time) of camera 14.

For example, Fig. 7 is a time chart illustrating a relationship between the pulse width and the cycle of the pulse-lighting, and the imaging time when only one illumination block 21 is pulse-lighted among three illumination blocks 21, 22, and 23 of side illumination apparatus 13. If the continuous lighting time which is the pulse width of pulse lighting when all illumination blocks 21, 22, and 23 of side illumination apparatus 13 are pulse-lighted at the same time is set to Ton [sec], and the off-lighting time is set to Toff [sec] as illustrated in Fig. 3, and when only one illumination block 21 is pulse-lighted as illustrated in Fig. 7, the discharging amount of capacitor 32 due to the pulse lighting is reduced to 1/3. Therefore, control section 24 of the parts mounter sets the off-lighting time which is the charging time of capacitor 32 to the off-lighting time Toff / 3 [SEC] which is 1/3 of the off-lighting time when three illumination blocks 21, 22, and 23 are pulse-lighted at the same time. In this case, since the continuous lighting time Ton which is the pulse width of the pulse lighting does not change, the number of pulse-lightings necessary for ensuring the light receiving amount of camera 14 does not change. However, since the cycle of pulse-lighting is reduced by "Toff × 2/3" which is the decrease of the off-lighting time, it is possible to reduce the imaging time of camera 14 as much as "(Toff × 2/3) × (the number of pulse-lightings - 1)".

On the other hand, Fig. 8 is a time chart illustrating a relationship between the pulse width and the cycle of the pulse-lighting, and the imaging time when two illumination blocks 21, 22 and 23 of side illumination apparatus 13 are pulse-lighted at the same time among three illumination blocks 21, 22, and 23. As illustrated, when two illumination blocks 22 and 23 are pulse-lighted at the same time, since the discharging amount of capacitor 32 due to the pulse lighting becomes 2/3, the off-lighting time which is the charging time of capacitor 32 is set to off-lighting time Toff × 2/3 [sec] which is 2/3 of the off-lighting time Toff when three illumination blocks 21, 22, and 23 are pulse-lighted at the same time. In this case also, since the continuous lighting time Ton which is the pulse width of the pulse lighting does not change, the number of pulse-lightings necessary for ensuring the light receiving amount of camera 14 does not change. However, since the cycle of pulse-lighting is reduced by "Toff / 3" which is the decrease of the off-lighting time, it is possible to reduce the imaging time of camera 14 as much as "(Toff / 3) × (the number of pulse-lightings - 1)".

In the present embodiment 2 also, the number of illumination blocks 21, 22, and 23 of side illumination apparatus 13 is not limited to be 3, and may be 2, or equal to or more than 4. Even in this case, as the number of illumination blocks to be pulse-lighted at the same time among the multiple illumination blocks decreases, the off-lighting time which is the charging time of capacitor 32 is reduced and the imaging time of camera 14 is reduced.

Generally, if the number of multiple illumination blocks is N (where N is an integer equal to or larger than 2) and when the off-lighting time which is the charging time of capacitor 32 when all of the multiple illumination blocks are pulse-lighted at the same time is set to Toff [sec], and when the number of illumination blocks to be pulse-lighted at the same time among multiple illumination blocks is M (where M is an integer equal to or larger than 1 and equal to smaller than N), the off-lighting time which is the charging time of capacitor 32 may be set to Toff × (M / N) [sec].

Also in the present embodiment 2 described above, the same effect as in the embodiment 1 can be obtained.

### Embodiment 3

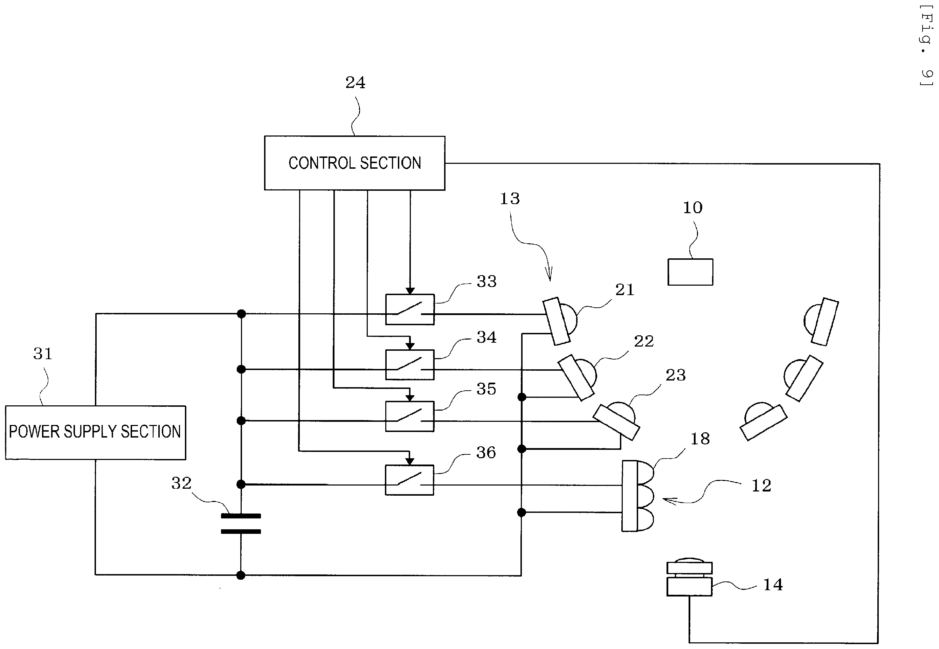

Next, embodiment 3 will be described with reference to Fig. 9. However, the same reference numerals will be assigned to actually the same portions as those of the embodiments 1 and 2, and descriptions thereof will be omitted or simplified, and mainly different portions will be described.

In the embodiments 1 and 2 described above, multiple illumination blocks 21, 22, and 23 of side illumination apparatus 13 are selectively pulse-lighted by the discharge current of capacitor 32, however, in embodiment 3 illustrated in Fig. 9, three illumination blocks 21, 22, and 23 of side illumination apparatus 13 and illumination block 18 of coaxial epi-illumination apparatus 12 are connected to capacitor 32 in parallel via switching elements 33 to 36 such as transistors, respectively. Control section 24 of the parts mounter selects the illumination blocks to be pulse-lighted at the same time from three illumination blocks 21, 22, and 23 of side illumination apparatus 13 and illumination block 18 of coaxial epi-illumination apparatus 12 according to the type (size, shape, material, and the like) of the part that is imaging target object 10 according to the production program (production job), controls the switching operation (ON/OFF operation) of switching elements 33 to 36 that pulse-light the selected illumination blocks, and also controls the imaging operation of camera 14. In this case, illumination block 18 of coaxial epi-illumination apparatus 12 may be divided into multiple illumination blocks as in side illumination apparatus 13.

In the present embodiment 3 also, by the same method as in the embodiment 1 or embodiment 2 described above, control section 24 of the parts mounter changes the continuous lighting time which is the pulse width of the pulse lighting according to the number of illumination blocks to be pulse-lighted at the same time among multiple illumination blocks 21, 22, 23, and 18 of side illumination apparatus 13 and coaxial epi-illumination apparatus 12, or changes the off-lighting time which is the charging time of capacitor 32 by changing the cycle of pulse-lighting. For example, by increasing the continuous lighting time which is the pulse width of pulse lighting, and by decreasing the off-lighting time which is the charging time of capacitor 32 as the number of illumination blocks to be pulse-lighted at the same time decreases, the imaging time of camera 14 is controlled to be reduced.

Also in the present embodiment 3 described above, the same effect as in the embodiment 1 can be obtained.

### Other Embodiment

In the embodiments 1 and 2 described above, the method of reducing the imaging time of parts imaging camera 14, however, for the camera for marking the reference position mark on the circuit board also, by changing the continuous lighting time which is the pulse width of pulse lighting according to the number of illumination blocks to be pulse-lighted at the same time among multiple illumination blocks or by changing the off-lighting time which is the charging time of the capacitor using the same method as in the embodiment 1 or embodiment 2 described above, the imaging time of the mark imaging camera for mark imaging may be reduced.

In addition, the present invention is not limited to the camera unit mounted on the parts mounter, and it is needless to say that various changes can be made within the scope of the claims, such as can be applied to various industrial machines mounted with an imaging illumination apparatus that selectively pulse-lights multiple illumination blocks connected to the charge section in parallel.

### Reference Signs List

10...imaging target object, 11...parts imaging camera unit, 12...coaxial epi-illumination apparatus, 13...side illumination apparatus, 14...camera, 16...optical axis, 17...LED (light emitting element), 18...illumination block, 21, 22, 23...illumination block, 21a, 22a, 23a...LED (light emitting element), 24...control section, 31...power supply section, 32...capacitor (charge section), 33-36...switching element

## Claims

1. An imaging illumination apparatus configured to illuminate an imaging target object (10) which is to be imaged by a camera (14) used for image recognition, the apparatus comprising:
multiple illumination blocks (21, 22, 23) configured to be individually lighted;
a charge section (32) configured to be charged by a power supply section (31);
multiple switching elements (33-36) configured to be connected to the charge section in parallel, and to discharge the charge section by an ON-operation and individually pulse-light the multiple illumination blocks by the discharged current; and
a control section (24) configured to select the illumination blocks to be pulse-lighted at the same time from the multiple illumination blocks, to control a switching operation of the switching elements that pulse-light the selected illumination blocks, and to control an imaging operation of the camera,
wherein the control section is configured to change a continuous lighting time
which is a pulse width of pulse lighting according to the number of illumination blocks to be pulse-lighted at the same time among the multiple illumination blocks, and to change an imaging time of the camera, wherein the control section is configured to increase the continuous lighting time and decrease the imaging time of the camera as the number of illumination blocks to be pulse-lighted at the same time among the multiple illumination blocks decreases.

2. The imaging illumination apparatus according to claim 1,
wherein the control section is configured to set the continuous lighting time to Ton × (N / M) [sec], when the continuous lighting time when all the multiple illumination blocks are pulse-lighted at the same time is Ton [sec] and the number of multiple illumination blocks is N (where, N is an integer of equal to or larger than 2), and when the number of illumination blocks to be pulse-lighted at the same time among the multiple illumination blocks is M (where, M is an integer equal to or larger than 1 and equal to or smaller than N)

3. An imaging illumination apparatus configured to illuminate an imaging target object (10) which is to be imaged by a camera (14) used for image recognition, the apparatus comprising:
multiple illumination blocks (21, 22, 23) configured to be individually lighted;
a charge section (32) configured to be charged by a power supply section (31);
multiple switching elements (33-36) configured to be connected to the charge section in parallel, and to discharge the charge section by an ON-operation and individually pulse-light the multiple illumination blocks by the discharged current; and a control section (24) configured to select the illumination blocks to be pulse-lighted at the same time from the multiple illumination blocks, to control a switching operation of the switching elements that pulse-light the selected illumination blocks, and to control an imaging operation of the camera,
wherein the control section is configured to change a cycle of pulse-lighting according to the number of illumination blocks to be pulse-lighted at the same time among the multiple illumination blocks, and change an off-lighting time which is a charging time of the charge section, and to change an imaging time of the camera, wherein the control section is configured to decrease the off-lighting time and decrease the imaging time of the camera as the number of illumination blocks to be pulse-lighted at the same time among the multiple illumination blocks decreases.

4. The imaging illumination apparatus according to claim 3, wherein the control section is configured to set the off-lighting time to Toff × (M / N) [sec], when the off-lighting time when all the multiple illumination blocks are pulse-lighted at the same time is Toff [sec] and the number of multiple illumination blocks is N (where, N is an integer of equal to or larger than 2), and when the number of illumination blocks to be pulse-lighted at the same time among the multiple illumination blocks is M (where, M is an integer equal to or larger than 1 and equal to or smaller than N).

5. The imaging illumination apparatus according to any one of claims 1 to 4, wherein the multiple illumination blocks are concentrically arranged around an optical axis (16) of the camera, and
wherein the control section is configured to change an irradiation angle of an illumination light to the imaging target object by selecting the illumination blocks to be pulse-lighted from the multiple illumination blocks.

6. The imaging illumination apparatus according to any one of claims 1 to 4, wherein the multiple illumination blocks are configured with equal to or more than two illumination blocks that illuminate the imaging target object from an oblique direction to an optical axis of the camera and at least one illumination block that illuminates the imaging target object from a direction parallel to the optical axis of the camera.

7. The imaging illumination apparatus according to any one of claims 1 to 6, wherein LEDs (17) are mounted as light emitting elements on each of the multiple illumination blocks.

8. A parts mounter on which the imaging illumination apparatus according to any one of claims 1 to 7 is mounted, the parts mounter comprising:
a suction nozzle,
wherein the parts mounter is configured to switch an illumination pattern, which is a combination pattern of lighting and off-lighting of the multiple illumination blocks, according to a type of a part in order to image the part as the imaging target object picked up by the suction nozzle using the camera.

## Patentansprüche

1. Bilderzeugungs-Beleuchtungsvorrichtung, die so konfiguriert ist, dass sie ein Bilderzeugungs-Zielobjekt (10) beleuchtet, dessen Bild von einer für Bilderkennung eingesetzten Kamera (14) erzeugt werden soll, wobei die Vorrichtung umfasst:
mehrere Beleuchtungsblöcke (21, 22, 23), die so konfiguriert sind, dass sie einzeln zum Leuchten gebracht werden;
einen Ladeabschnitt (32), der so konfiguriert ist, dass er von einem Stromversorgungsabschnitt (31) geladen wird;
mehrere Schaltelemente (33-36), die so konfiguriert sind, dass sie parallel mit dem Ladeabschnitt verbunden sind,
und den Ladeabschnitt durch eine AN-Betätigung entladen und die mehreren Beleuchtungsblöcke mit dem entladenen Strom einzeln impulsartig zum Leuchten bringen; sowie
einen Steuerungsabschnitt (24), der so konfiguriert ist, dass er die zur gleichen Zeit impulsartig zum Leuchten zu bringenden Beleuchtungsblöcke aus den mehreren Beleuchtungsblöcken auswählt,
eine Schaltbetätigung der Schaltelemente steuert, die die ausgewählten Beleuchtungsblöcke impulsartig zum Leuchten bringen, und eine Bilderzeugungs-Betätigung der Kamera steuert,
wobei der Steuerungsabschnitt so konfiguriert ist, dass er eine durchgehende Leucht-Zeit, die eine Impulsbreite impulsartigen Aufleuchtens ist, entsprechend der Anzahl zur gleichen Zeit impulsartig zum Leuchten zu bringender Beleuchtungsblöcke der mehreren Beleuchtungsblöcke ändert und eine Bilderzeugungs-Zeit der Kamera ändert, wobei der Steuerungsabschnitt so konfiguriert ist, dass er die durchgehende Leucht-Zeit verlängert und die Bilderzeugungs-Zeit der Kamera verkürzt, wenn die Anzahl zur gleichen Zeit impulsartig zum Leuchten zu bringender Beleuchtungsblöcke der mehreren Beleuchtungsblöcke abnimmt.

2. Bilderzeugungs-Beleuchtungsvorrichtung nach Anspruch 1,
wobei der Steuerungsabschnitt so konfiguriert ist, dass er die durchgehende Leucht-Zeit auf Ton × (N/M) [s] einstellt, wenn die durchgehende Leucht-Zeit, zu der alle der mehreren Beleuchtungsblöcke zur gleichen Zeit impulsartig zum Leuchten gebracht werden, Ton [s] ist und die Anzahl mehrerer Beleuchtungsblöcke N ist (wobei N eine ganze Zahl gleich oder größer als 2 ist), und die zur gleichen Zeit impulsartig zum Leuchten zu bringende Anzahl von Beleuchtungsblöcken der mehreren Beleuchtungsblöcke M ist (wobei M eine ganze Zahl gleich oder größer als 1 und gleich oder kleiner als N ist).

3. Bilderzeugungs-Beleuchtungsvorrichtung, die so konfiguriert ist, dass sie ein Bilderzeugungs-Zielobjekt (10) beleuchtet, dessen Bild von einer für Bilderkennung eingesetzten Kamera (14) erzeugt werden soll, wobei die Vorrichtung umfasst:
mehrere Beleuchtungsblöcke (21, 22, 23), die so konfiguriert sind, dass sie einzeln zum Leuchten gebracht werden;
einen Ladeabschnitt (32), der so konfiguriert ist, dass er von einem Stromversorgungsabschnitt (31) geladen wird;
mehrere Schaltelemente (33-36), die so konfiguriert sind, dass sie parallel mit dem Ladeabschnitt verbunden sind, und den Ladeabschnitt durch eine AN-Betätigung entladen und die mehreren Beleuchtungsblöcke mit dem entladenen Strom einzeln impulsartig zum Leuchten bringen; sowie einen Steuerungsabschnitt (24), der so konfiguriert ist, dass er die zur gleichen Zeit impulsartig zum Leuchten zu bringenden Beleuchtungsblöcke aus den mehreren Beleuchtungsblöcken auswählt, eine Schaltbetätigung der Schaltelemente steuert, die die ausgewählten Beleuchtungsblöcke impulsartig zum Leuchten bringen, und eine Bilderzeugungs-Betätigung der Kamera steuert,
wobei der Steuerabschnitt so konfiguriert ist, dass er einen Zyklus impulsartigen Leuchtens entsprechend der Anzahl zur gleichen Zeit impulsartig zum Leuchten zu bringender Beleuchtungsblöcke der mehreren Beleuchtungsblöcke ändert, und eine Zeit ohne Leuchten ändert, die eine Ladezeit des Ladeabschnitts ist, und eine Bilderzeugungs-Zeit der Kamera ändert, wobei der Steuerungsabschnitt so konfiguriert ist, dass er die Zeit ohne Leuchten verkürzt und die Bilderzeugungs-Zeit der Kamera verkürzt, wenn die Anzahl zur gleichen Zeit impulsartig zum Leuchten zu bringender Beleuchtungsblöcke der mehreren Beleuchtungsblöcke abnimmt.

4. Bilderzeugungs-Beleuchtungsvorrichtung nach Anspruch 3, wobei der Steuerungsabschnitt so konfiguriert ist, dass er die Zeit ohne Leuchten auf Toff × (M/N) [s] einstellt, wenn die Zeit ohne Leuchten, zu der alle der mehreren Beleuchtungsblöcke zur gleichen Zeit impulsartig zum Leuchten gebracht werden, Toff [s] ist und die Anzahl mehrerer Beleuchtungsblöcke N ist (wobei N eine ganze Zahl gleich oder größer als 2 ist), und die Anzahl zur gleichen Zeit impulsartig zum Leuchten zu bringender Beleuchtungsblöcke der mehreren Beleuchtungsblöcke M ist (wobei M eine ganze Zahl gleich oder größer als 1 und gleich oder kleiner als N ist).

5. Bilderzeugungs-Beleuchtungsvorrichtung nach einem der Ansprüche 1 bis 4, wobei die mehreren Beleuchtungsblöcke konzentrisch um eine optische Achse (16) der Kamera herum angeordnet sind, und
der Steuerungsabschnitt so konfiguriert ist, dass er einen Bestrahlungswinkel eines Beleuchtungslichtes auf das Bilderzeugungs-Zielobjekt ändert, indem er die impulsartig zum Leuchten zu bringenden Beleuchtungsblöcke aus den mehreren Beleuchtungsblöcken auswählt.

6. Bilderzeugungs-Beleuchtungsvorrichtung nach einem der Ansprüche 1 bis 4, wobei die mehreren Beleuchtungsblöcke mit zwei oder mehr als zwei Beleuchtungsblöcken, die das Bilderzeugungs-Zielobjekt in einer Richtung schräg zu einer optischen Achse der Kamera beleuchten, sowie mit wenigstens einem Beleuchtungsblock konfiguriert sind, der das Bilderzeugungs-Zielobjekt in einer Richtung parallel zu der optischen Achse der Kamera beleuchtet.

7. Bilderzeugungs-Beleuchtungsvorrichtung nach einem der Ansprüche 1 bis 6, wobei mehrere LED (17) als lichtemittierende Elemente an jedem der mehreren Beleuchtungsblöcke angebracht sind.

8. Vorrichtung zum Montieren von Teilen, an der die Bilderzeugungs-Beleuchtungsvorrichtung nach einem der Ansprüche 1 bis 7 installiert ist, wobei die Vorrichtung zum Montieren von Teilen umfasst:
eine Saugdüse,
wobei die Vorrichtung zum Montieren von Teilen so konfiguriert ist, dass sie ein Beleuchtungsmuster, das ein Kombinationsmuster aus leuchtenden und nicht leuchtenden der mehreren Beleuchtungsblöcke ist, entsprechend einem Typ eines Teils umschaltet, um ein Bild des Teils als dem von der Saugdüse aufgenommenen Bilderzeugungs-Zielobjekt unter Einsatz der Kamera zu erzeugen.

## Revendications

1. Appareil d'éclairage d'imagerie configuré pour éclairer un objet cible d'imagerie (10) qui doit être imagé par une caméra (14) utilisée pour la reconnaissance d'images, l'appareil comprenant :
plusieurs blocs d'éclairage (21, 22, 23) configurés pour être éclairés individuellement ;
une section de charge (32) configurée pour être chargée par une section d'alimentation (31) ;
plusieurs éléments de commutation (33-36) configurés pour être connectés à la section de charge en parallèle, et pour décharger la section de charge par une opération ON et éclairer individuellement les plusieurs blocs d'éclairage par le courant déchargé ; et
une section de commande (24) configurée pour sélectionner les blocs d'éclairage à éclairer simultanément parmi les plusieurs blocs d'éclairage, pour commander une opération de commutation des éléments de commutation qui éclairent par impulsions les blocs d'éclairage sélectionnés, et pour commander une opération d'imagerie de la caméra,
dans lequel la section de commande est configurée pour modifier une durée d'éclairage continu qui est une largeur d'impulsion de l'éclairage par impulsions en fonction du nombre de blocs d'éclairage à éclairer par impulsions en même temps parmi les plusieurs blocs d'éclairage, et pour modifier une durée d'imagerie de la caméra,
la section de commande étant configurée pour augmenter la durée d'éclairage continu et diminuer la durée d'imagerie de la caméra à mesure que le nombre de blocs d'éclairage à éclairer par impulsions en même temps parmi les plusieurs blocs d'éclairage diminue.

2. Appareil d'éclairage d'imagerie selon la revendication 1,
dans lequel la section de commande est configurée pour régler la durée d'éclairage continu sur Ton × (N/M) [sec], lorsque la durée d'éclairage continu lorsque tous les plusieurs blocs d'éclairage sont éclairés par impulsions en même temps est Ton [sec] et que le nombre de plusieurs blocs d'éclairage est N (où N est un nombre entier égal ou supérieur à 2), et lorsque le nombre de blocs d'éclairage à éclairer par impulsions en même temps parmi les plusieurs blocs d'éclairage est M (où M est un nombre entier égal ou supérieur à 1 et égal ou inférieur à N) .

3. Appareil d'éclairage d'imagerie configuré pour éclairer un objet cible d'imagerie (10) qui doit être imagé par une caméra (14) utilisée pour la reconnaissance d'images, l'appareil comprenant :
plusieurs blocs d'éclairage (21, 22, 23) configurés pour être éclairés individuellement ;
une section de charge (32) configurée pour être chargée par une section d'alimentation (31) ;
plusieurs éléments de commutation (33-36) configurés pour être connectés à la section de charge en parallèle, pour décharger la section de charge par une opération ON et pour éclairer individuellement les plusieurs blocs d'éclairage par le courant déchargé ; et une section de commande (24) configurée pour sélectionner les blocs d'éclairage à éclairer simultanément parmi les plusieurs blocs d'éclairage, pour commander une opération de commutation des éléments de commutation qui éclairent par impulsion les blocs d'éclairage sélectionnés, et pour commander une opération d'imagerie de la caméra,
dans lequel la section de commande est configurée pour modifier un cycle d'éclairage par impulsions en fonction du nombre de blocs d'éclairage à éclairer par impulsions en même temps parmi les plusieurs blocs d'éclairage, et pour modifier un temps d'extinction de l'éclairage qui est un temps de charge de la section de charge, et pour modifier une durée d'imagerie de la caméra, dans lequel la section de commande est configurée pour diminuer le temps d'extinction de l'éclairage et diminuer la durée d'imagerie de la caméra à mesure que le nombre de blocs d'éclairage à éclairer par impulsions en même temps parmi les plusieurs blocs d'éclairage diminue.

4. Appareil d'éclairage d'imagerie selon la revendication 3, dans lequel la section de commande est configurée pour régler le temps d'extinction à Toff × (M/N) [sec], lorsque le temps d'extinction lorsque tous les plusieurs blocs d'éclairage sont éclairés par impulsions en même temps est Toff [sec] et que le nombre de plusieurs blocs d'éclairage est N (où, N est un nombre entier égal ou supérieur à 2), et lorsque le nombre de blocs d'éclairage à éclairer simultanément parmi les plusieurs blocs d'éclairage est M (où, M est un nombre entier égal ou supérieur à 1 et égal ou inférieur à n).

5. Appareil d'éclairage d'imagerie selon l'une des revendications 1 à 4, dans lequel les plusieurs blocs d'éclairage sont disposés concentriquement autour d'un axe optique (16) de la caméra, et
dans lequel la section de commande est configurée pour modifier l'angle d'irradiation d'une lumière d'éclairage sur l'objet cible d'imagerie en sélectionnant les blocs d'éclairage à éclairer par impulsions parmi les plusieurs blocs d'éclairage.

6. Appareil d'éclairage d'imagerie selon l'une quelconque des revendications 1 à 4, dans lequel les plusieurs blocs d'éclairage sont configurés avec un nombre égal ou supérieur à deux blocs d'éclairage qui éclairent l'objet cible d'imagerie à partir d'une direction oblique par rapport à l'axe optique de la caméra et au moins un bloc d'éclairage qui éclaire l'objet cible d'imagerie à partir d'une direction parallèle à l'axe optique de la caméra.

7. Appareil d'éclairage d'imagerie selon l'une quelconque des revendications 1 à 6, dans lequel les DEL (17) sont montées en tant qu'éléments émetteurs de lumière sur chacun des plusieurs blocs d'éclairage.

8. Monteur de pièces sur lequel est monté l'appareil d'éclairage par imagerie selon l'une quelconque des revendications 1 à 7, le support de pièces comprenant :
une buse d'aspiration,
dans lequel le monteur de pièces est configuré pour commuter un modèle d'éclairage, qui est une combinaison d'éclairage et d'extinction des plusieurs blocs d'éclairage, en fonction d'un type de pièce pour obtenir une image de la pièce en tant qu'objet cible prélevé par la buse d'aspiration à l'aide de la caméra.
